# EUROPÄISCHE PATENTSCHRIFT

(11) **EP 3 908 797 B1**
(45) Veröffentlichungstag und Bekanntmachung des Hinweises auf die Patenterteilung: **19.07.2023**
(21) Anmeldenummer: 20700448.2
(22) Anmeldetag: 08.01.2020
(51) Int. Cl.: F27B 15/12, C21D 9/00, C21D 1/42, F27D 3/00, F27D 5/00, F27B 9/26, F27B 9/38, B21C 23/08, B21C 29/00, C21D 8/10

(54) **VERFAHREN ZUR INDUKTIVEN ERWÄRMUNG VON STAHLBLÖCKEN UNTER VERWENDUNG EINER SCHALE ALS TRANSPORTSCHUH SOWIE EINRICHTUNG ZUR DURCHFÜHRUNG DES VERFAHRENS**
METHOD FOR INDUCTIVELY HEATING STEEL INGOTS USING A SHELL AS TRANSPORTING SHOE AND DEVICE FOR CARRYING OUT THE METHOD
PROCÉDÉ DE RÉCHAUFFAGE PAR INDUCTION DE BLOCS EN ACIER UTILISANT UNE COQUE FAISANT OFFICE DE PATIN DE TRANSPORT, ET DISPOSITIF DE MISE EN OEUVRE DU PROCÉDÉ

(30) Priorität: 08.01.2019 DE 102019200114; 08.03.2019 DE 102019203157
(43) Veröffentlichungstag der Anmeldung: 17.11.2021
(73) Patentinhaber: SMS Group GmbH, 40237 Düsseldorf (DE)
(72) Erfinder: FUSSBROICH, Klaus, 50827 Köln (DE)
(74) Vertreter: Kross, Ulrich
(86) Internationale Anmeldenummer: PCT/EP2020/050309
(87) Internationale Veröffentlichungsnummer: WO 2020/144229

(56) Entgegenhaltungen:
- WO-A1-01/20053
- JP-A- H 116 016
- JP-A- 2011 127 135
- US-A1- 2018 359 816

## Beschreibung

### Technisches Gebiet

Die Erfindung betrifft weiterhin ein Verfahren zur induktiven Erwärmung von Stahlblöcken unter Verwendung wenigstens einer Schale aus einem nicht magnetisierbaren oder nicht induktiven Blech als Transportschuh für die Stahlblöcke zwecks Herstellung nahtloser Rohre im Strangpressverfahren sowie eine Einrichtung zur Durchführung des Verfahrens.

### Hintergrund der Erfindung

Für die Herstellung von nahtlosen Stahlrohren mittels Strangpressverfahren werden zylinderförmigen Blöcke aus Stahl benötigt, die zunächst bis zu einer Temperatur von ca. 800 °C induktiv vorgewärmt werden. Hierzu werden die Stahlblöcke üblicherweise einzeln auf einen vor der Eintrittsöffnung eines Induktionsofens befindlichen Rollgang gelegt und sodann mittels eines hydraulisch betätigten Stempels in den Induktionsofen geschoben. Als Induktionsöfen werden Öfen mit hintereinander angeordneten zylindrischen Induktionsspulen verwendet, die in einer liegenden Anordnung in einer sich horizontal erstreckenden Betonröhre vergossen sind. Der Durchmesser der Betonröhre ist nur unwesentlich größer als der Durchmesser der zu erwärmenden zylindrischen Stahlblöcke. Deshalb ist in der Betonröhre für Einbauten wenig Platz vorhanden. Die Stahlblöcke werden daher auf stationär innerhalb der Betonröhre bzw. innerhalb des Induktionsofens befindlichen Blechstreifen oder Rundstahl-Stäben durchgeschoben. Die Stahleinlagen in Form von Blechstreifen oder Rundstahl-Stäben dienen dazu, einem durch Gleitreibung bedingten Verschleiß der Betonröhre entgegenzuwirken.

Die Länge eines Induktionsofens beträgt ein Vielfaches der Länge des jeweils zu erwärmenden Stahlblocks, beispielsweise in der Größenordnung von etwa 8 m. Durch den Induktionsofen wird eine Säule von mehreren Stahlblöcken kontinuierlich durchgeschoben, wobei ein dem Induktionsofen zugeführter Stahlblock mehrere bereits in dem Induktionsofen befindliche Stahlblöcke vorwärtsschiebt. Am Ende des Induktionsofens befindet sich eine Ausgleichskammer, in der immer der vorderste in der Blocksäule befindliche Block homogenisiert wird.

Diese Vorgehensweise ist mit dem Nachteil behaftet, dass sich an der äußeren Mantelfläche der Stahlblöcke mit zunehmender Erwärmung der Stahlblöcke Riefen, oder Schleifspuren bilden, die zu sichtbaren Qualitätsmängeln am Endprodukt führen.

Aus der KR 100807682 B1 ist eine Zuführeinrichtung für Induktionsöfen bekannt, die anstelle eines sich durch den Induktionsofen erstreckenden schalenförmigen Blechstreifens mehrere in sphärischen Ausnehmungen der Betonröhre gelagerte Kugeln vorsieht, die sich in einem punktförmigen Kontakt mit dem Werkstück befinden. Dadurch soll in erster Linie eine bessere Verteilung der Temperatur innerhalb des Werkstücks erreicht werden. Das Problem etwa entstehender sichtbarer Verletzungen der Mantelfläche des Werkstücks ist in dieser Druckschrift nicht angesprochen.

Aus der JP2011 127135 A ist ein Verfahren zur induktiven Erwärmung von Stahlblöcken bekannt, bei welchem Stahlblöcke in drei Stufen in mehreren Öfen nacheinander induktiv auf eine Erweichungstemperatur von über 1100 °C gebracht werden. In einer ersten Erwärmungsstufe werden die Stahlblöcke in üblicher Art und Weise in einer Blocksäule durch einen ersten Induktionsofen geschoben. In einer zweiten oder weiteren Stufe werden die Stahlblöcke dann mittels eines Roboters auf ein Tablett verbracht, wobei das Tablett so ausgestaltet ist, dass die Kontaktfläche mit dem Stahlblock minimal ist.

Aus der JP H11 6016 A ist ein Verfahren zum induktiven Erwärmen von Aluminiumblöcken bekannt, bei dem die einzelnen Aluminiumblöcke auf Schalen aus feuerfester Keramik verbracht werden, die auf Führungsschienen durch einen Induktionsofen geschoben und dort erwärmt werden.

Weiterer Stand der Technik ist aus den Dokumenten US 2018/359816 A1 und WO 01/20053 A1 bekannt.

Der Erfindung liegt die Aufgabe zugrunde ein Verfahren gemäß JP2011 127135 A dahingehend zu verbessern, dass das Entfernen erwärmter Stahlblöcke von der Unterlage vereinfacht wird. Der Erfindung liegt weiterhin die Aufgabe zugrunde, eine Vorrichtung zur Durchführung des Verfahrens bereitzustellen.

### Darstellung der Erfindung

Die vorstehend beschriebene Aufgabe wird gelöst mit den Merkmalen des Anspruchs 1 sowie mit einer Einrichtung zur Durchführung des Verfahrens gemäß Anspruch 4.

Für das Verfahren gemäß der Erfindung wird eine Schale als Transportschuh für Stahlblöcke bereitgestellt, die zur induktiven Erwärmung zwecks Herstellung nahtloser Rohre im Strangpressverfahren durch einen vorzugsweisen röhrenförmigen Induktionsofen geschoben werden. Die Schale ist so ausgebildet, dass sie die Kontur des zu erwärmenden Stahlblocks teilweise umgreift. Die Schale ist an einem in Durchschubrichtung oder Transportrichtung durch den Induktionsofen führenden Ende mit einer sich in einem Winkel zur Transportrichtung nach oben erstreckenden Schulter oder mit einem Mitnehmer versehen, die oder der gegen den Stahlblock so anliegt, dass der durchgeschobene Stahlblock die Schale mitnimmt.

Durch den Transportschuh bzw. die Schale gemäß der Erfindung erfolgt in vorteilhafter Art und Weise eine Trennung des zu erwärmenden Stahlblocks vom Unterbau, d. h. von einem sich innerhalb des Induktionsofens erstreckenden Blechstreifen oder von sich innerhalb des Induktionsofens erstreckenden Rundstahl-Stäben. Es findet dadurch beim Durchschieben der Stahlblöcke durch den Induktionsofen keine Gleitreibung zwischen der Mantelfläche des Stahlblocks und der Auskleidung des Induktionsofens bzw. den Führungsmitteln innerhalb des Induktionsofens statt. Die an der Schale vorgesehene Mitnehmerschulter hat die Funktion eines Mitnehmers, der sicherstellt, dass die Schale bzw. der Transportschuh beim Durchschieben durch den Induktionsofen unverlierbar an dem Stahlblock verbleibt. Die für die Herstellung nahtloser Rohre verwendeten Stahlblöcke sind naturgemäß zylindrisch, sodass zweckmäßigerweise die Schale eine zylindrische Mantelfläche aufweist und die Mantelfläche einen Krümmungsradius besitzt, der dem Krümmungsradius der Mantelfläche des Stahlblocks etwa entspricht. Die Schulter erstreckt sich zweckmäßigerweise in Richtung auf den von der zylindrischen Mantelfläche umschlossenen Hohlraum, d. h. einwärts und in Transportrichtung nach oben weisend. Die Schulter kann sich beispielsweise in einem rechten Winkel zur Symmetrieachse der Schale erstrecken.

Die Schale besteht aus einem nicht magnetisierbaren bzw. nicht induktiven Blech.

In einer bevorzugten Variante weist die Schale Zentriermittel auf, die mit entsprechend ausgebildeten Führungsmitteln des Induktionsofens zusammenwirken. Beispielsweise kann die Schale als Zentriermittel Zentrierschultern aufweisen, die sich parallel zu einer Symmetrieachse der Schale erstrecken und die mit Rundstahlstäben des Induktionsofens als Führungsmittel zusammenwirken. Die Zentrierschultern erstrecken sich vorzugsweise bezogen auf die Krümmung der Mantelfläche radial auswärts.

Anstelle von Zentrierschultern können an der äußeren Mantelfläche der Schale auch Wulste oder Kufen vorgesehen sein, die sich parallel zur Symmetrieachse bzw. Längsachse der Schale erstrecken.

Die der Erfindung zugrunde liegende Aufgabe gelöst durch ein Verfahren zur induktiven Erwärmung von Stahlblöcken zwecks Herstellung nahtloser Rohre im Strangpressverfahren unter Verwendung wenigstens einer Schale der vorstehend beschriebenen Art. Das Verfahren umfasst folgende Verfahrensschritte:
a) Entnehmen einer Schale aus einem Schalenmagazin,
b) Bereitstellen der Schale auf einer Einschubeinrichtung, sodass die Schulter an dem in Transportrichtung führenden Ende zu liegen kommt und gegen die Schwerkraftrichtung nach oben weist,
c) Auflegen des Stahlblocks auf die Schale,
d) Einschieben der Anordnung der Schale mit dem darauf befindlichen Stahlblock in den Induktionsofen, wobei die Anordnung aus Schale und Stahlblock dabei einen gegebenenfalls bereits in dem Induktionsofen befindlichen Stahlblock auf einer Schale weiterschiebt,
e) Herausziehen des erwärmten Stahlblocks auf der Schale und mit der Schale aus dem Induktionsofen,
f) Trennen des erwärmenden Stahlblocks von der Schale und
g) Wiederholen der Verfahrensschritte a) bis f).

Als Einschubeinrichtung kann beispielsweise ein Einschieberollgang vorgesehen sein, der fluchtend vor dem betreffenden Induktionsofen angeordnet ist.

Zweckmäßigerweise wird die Schale mittels einer Hebeeinrichtung aus dem Schalenmagazin entnommen und auf einem Einschieberollgang abgelegt, anschließend wird der Stahlblock auf die auf dem Einschieberollgang befindliche Schale abgelegt und die Anordnung umfassend die Schale und den Stahlblock wird mittels eines hydraulischen Stempels von dem Einschieberollgang in den Induktionsofen geschoben. Die Hebeeinrichtung kann in vorteilhafter Art und Weise als Vakuum-Hebeeinrichtung ausgebildet sein.

Erfindungsgemäß kann vorgesehen sein, dass das Verfahren den parallelen Betrieb mehrerer Induktionsöfen umfasst. In diesem Fall ist es zweckmäßig, wenn mehrere Einschieberollgänge vorgesehen sind. In diesem Fall können kalte Stahlblöcke über ein einziges Transportmittel, beispielsweise über einen Zuführrollgang, einer Beladestation zugeführt werden, an welcher die Schalen gemäß der Erfindung mit den kalten Stahlblöcken beladen werden.

Besonders vorteilhaft ist es, wenn mehrere Schalenmagazine vorgesehen sind, die einen kontinuierlichen Verfahrensgang ermöglichen. Zweckmäßigerweise wird der Füllstand der Schalenmagazine sensorisch überwacht, sodass je nach Füllstand Schalen abwechselnd aus dem einen oder anderen Schalenmagazin entnommen werden können. Während beispielsweise aus einem Schalenmagazin Schalen entnommen werden, können die in dem Verfahren freiwerdenden Schalen dem anderen Schalenmagazin zugeführt werden.

Die der Erfindung zugrunde liegende Aufgabe wird weiterhin gelöst durch eine Einrichtung zur Durchführung des vorstehend beschrieben Verfahrens umfassend wenigstens einen röhrenförmig ausgebildeten Induktionsofen, wenigstens ein Schalenmagazin mit einer Vielzahl von Schalen der vorstehend beschriebenen Art, wenigstens ein Transportmittel zur Bereitstellung von Schalen an einer Beladestation, wenigstens ein Transportmittel zur Zuführung von kalten Stahlblöcken an die Beladestation, an welcher jeweils ein kalter Stahlblock auf einer Schale abgelegt wird, wenigstens eine Einrichtung zum Einschieben von auf den Schalen abgelegten Stahlblöcken, Mittel zur Entnahme von erwärmten Stahlblöcken aus dem Induktionsofen, wenigstens ein Transportmittel zum Abtransport der erwärmten Stahlblöcke sowie Mittel zum Trennen der erwärmten Stahlblöcke von den Schalen.

Die Vorrichtung kann wenigstens einen ortsfesten Zuführrollgang für kalte Stahlblöcke, einen Einschieberollgang zur Aufnahme von Schalen mit darauf angeordneten Stahlblöcken, wenigstens einen Entnahmerollgang sowie wenigstens einen Abtransportrollgang umfassen. Die Vorrichtung kann mehrere Induktionsöfen umfassen. Der Zuführrollgang sowie der Abtransportrollgang können jeweils mehreren Induktionsöfen zugeordnet sein.

Die Vorrichtung gemäß der Erfindung zeichnet sich dadurch aus, dass ein Transportmittel, vorzugsweise der Abtransportrollgang, als Mittel zum Trennen der erwärmten Stahlblöcke von den Schalen wenigstens einen Anschlag aufweist, der unmittelbar gegen eine in Transportrichtung des erwärmten Stahlblocks führende Stirnseite des Stahlblocks wirkt und der so angeordnet ist, dass er beim Anheben der Anordnung aus Schale und Stahlblock als Abstreifer für die Schale wirkt.

Der Anschlag kann beispielsweise als über dem Transportmittel angeordnetes Joch ausgebildet sein, dessen Höhe so gewählt ist, dass eine Stirnseite des erwärmten Stahlblocks gegen das Joch anschlägt, so dass die Schale auf dem Transportmittel weiterbewegt wird. Bleibt die Schale an dem erwärmten Stahlblock hängen, bewirkt ein Anheben des Stahlblocks, dass die Schale an dem Joch abgestreift wird, wenn eine nach oben weisende Kante der Schulter der Schale an der Unterseite des Jochs anschlägt.

### Kurze Beschreibung der Figuren

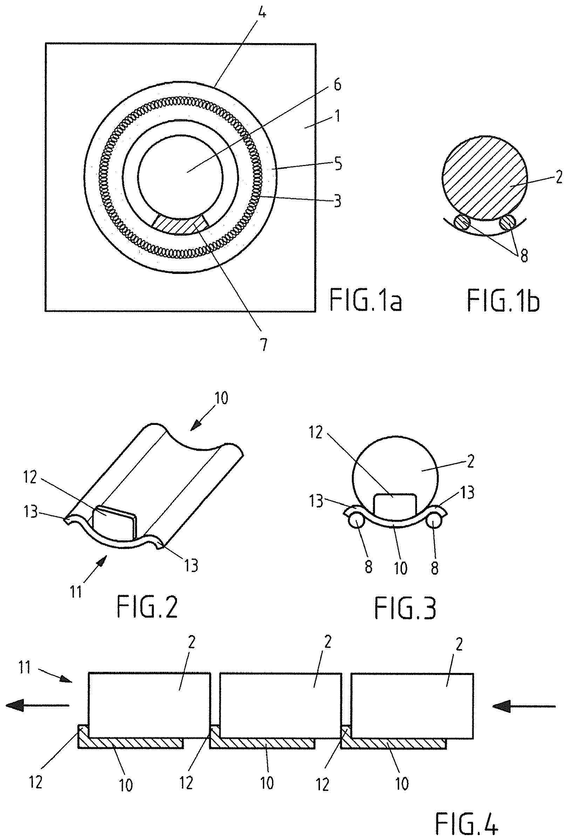

Figur 1 a) zeigt einen schematischen Querschnitt durch einen Induktionsofen zur Vorwärmung zylindrische Stahlblöcke, wobei der Induktionsofen innenseitig mit einem teilzylindrischen Blechstreifen ausgekleidet ist,
Figur 1 b) veranschaulicht schematisch eine Variante des Induktionsofens, in dem sich innenseitig Rundstahl-Stäbe erstrecken,
Figur 2 zeigt eine perspektivische Darstellung einer Schale als Transportschuh gemäß der Erfindung,
Figur 3 zeigt eine Vorderansicht einer Schale, die mit einem Stahlblock beladen ist, in ihrer auf Rundstahl-Stäben gelagerten Position,
Figur 4 zeigt schematisch die Anordnung von mehreren Stahlblöcken, jeweils mit einer Schale bzw. einem Transport zu versehen in einer Blocksäule, wie sie sich im Inneren des Induktionsofens ergibt,
Figur 5 zeigt eine schematische Draufsicht auf eine Anordnung von Induktionsöfen zufuhrseitig und die Einrichtungen zur Beschickung der Induktionsöfen mit kalten Stahlblöcken,
Figur 6 zeigt eine schematische Draufsicht auf eine Anordnung von Induktionsöfen abfuhrseitig sowie die Einrichtungen zum Abtransport von erwärmten Stahlblöcken
Figur 7 zeigt eine schematische Draufsicht auf einer Anordnung von Transporteinrichtungen abfuhrseitig, anhand derer das Sammeln leerer Schalen veranschaulicht wird, und
Fig. 8 zeigt eine perspektivische Darstellung eines erwärmten Stahlblocks in einer Blockentnahmeposition., in der der Stahlblock gegen den Anschlag anliegt.

### Detaillierte Beschreibung bevorzugter Ausführungsbeispiele

Figur 1 zeigt einen Querschnitt eines Induktionsofens 1 zur induktiven Vorwärmung von zylindrischen Stahlblöcken 2, die eine Weiterverarbeitung in einem Strangpressverfahren zu nahtlosen Stahlrohren erfahren sollen. Hierzu werden die Stahlblöcke 2 in horizontaler Lage in dem Induktionsofen 1 auf eine Temperatur von etwa 800 °C vorgewärmt. Die Vorwärmung erfolgt durch mehrere hintereinander in dem Induktionsofen 1 angeordnete Induktionsspulen 3, die in dem betreffenden Stahlblock 2 Wirbelströme induzieren und dabei dessen Erwärmung bewirken.

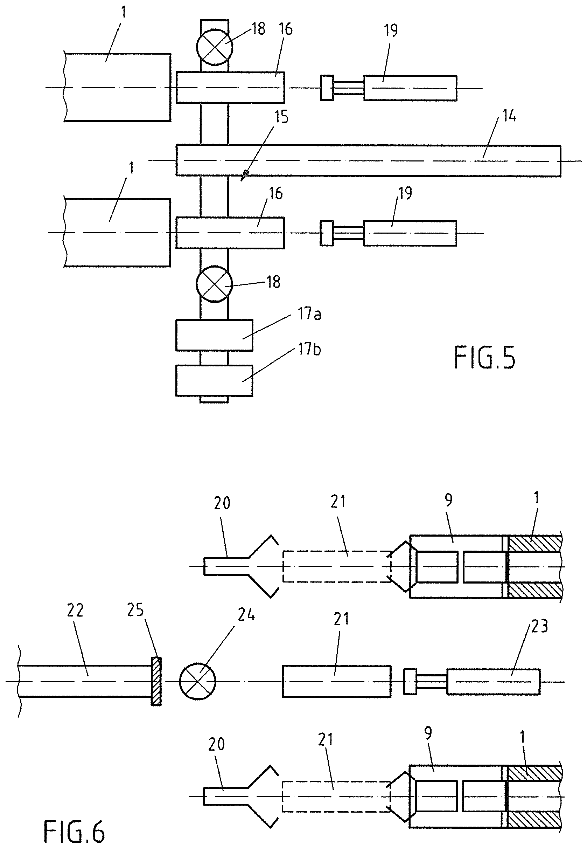

Der Induktionsofen 1 besitzt einen zylindrischen Querschnitt und umfasst einen äußeren Stahlmantel 4 und eine innere Betonauskleidung 5, in welcher die Induktionsspulen 3 vergossen sind. Der Ofenraum 6 ist hohlzylindrisch ausgebildet, dessen lichter Querschnitt ist nur geringfügig größer als der Querschnitt der zu erwärmenden Stahlblöcke 2. Die zu erwärmenden Stahlblöcke 2 werden zufuhrseitig in die von dem Induktionsofen 1 gebildete Röhre eingeschoben, wobei in der beispielsweise bis zu 8 m langen Röhre eine Blocksäule von mehreren hintereinander angeordneten Stahlblöcken 2 gebildet wird. Jeweils ein zugeführter Stahlblock 2 schiebt die in dem Induktionsofen 1 befindlichen Stahlblöcke 2 weiter. Am Ende des Induktionsofens 1 befindet sich eine Ausgleichskammer 9 (Fig.5), in der jeweils der vorderste in der Blocksäule befindliche Stahlblock 2 homogenisiert wird. Zur Schonung der Betonauskleidung 5 ist diese entweder mit einem in Einbaulage unten angeordneten teilzylindrischen Blechstreifen 7 (Variante gemäß Figur 1 a) ) oder mit wenigstens zwei ebenfalls in Einbaulage unten in einem Winkelabstand zueinander angeordneten Rundstahl-Stäben 8 (Variante gemäß Figur 1 b)) versehen. Sowohl der Blechstreifen 7 als auch die Rundstahl-Stäbe 8 erstrecken sich von einem Ende zu dem jeweils gegenüberliegenden Ende des Induktionsofens 1. Innerhalb des Induktionsofens 1 erfahren die Stahlblöcke 2 von einem Ende bis zu dem gegenüberliegenden Ende eine zunehmende Erwärmung und eine damit einhergehende zunehmende Erweichung. Dabei gleiten die Stahlblöcke 2 entweder auf dem Blechstreifen 7 oder auf den Rundstahl-Stäben 8, was normalerweise zur Folge hätte, dass die Mantelfläche bzw. Außenhaut der Stahlblöcke 2 beschädigt wird. Hier setzt die Erfindung ein.

Erfindungsgemäß ist eine Schale 10 vorgesehen, die als Transportschuh für jeweils einen Stahlblock 2 verwendet wird. Die Schale 10 ist perspektivisch in Figur 2 dargestellt. Die Schale 10 bildet eine Unterlage für jeweils einen Stahlblock 2, die mit dem darauf angeordneten Stahlblock 2 über die Rundstahl-Stäbe 8 oder über den Blechstreifen 7 des Induktionsofens 1 gleitet.

Wie aus Figur 2 ersichtlich ist, ist die Schale 10 als teilzylindrische, nach oben offene Wanne ausgebildet, deren Krümmungsradius dem Radius der Mantelfläche eines Stahlblocks 2 etwa entspricht. Die Schale 10 ist an einem in Transportrichtung führenden Ende 11 mit einer Schulter 12 versehen, die sich senkrecht zur Transportrichtung und quer zu dieser nach oben erstreckt und gegen eine in Transportrichtung führende Stirnfläche des Stahlblocks 2 anliegt. Die Schulter 12, die als einfacher Anschlag ausgebildet ist, bewirkt, dass ein auf der Schale 10 aufliegender Stahlblock 2 die Schale 10 mitnimmt, wenn dieser durch den Induktionsofen 1 geschoben wird.

Die Schale 10 ist an ihren parallel zur Längsachse bzw. Symmetrieachse verlaufenden Längsseiten jeweils mit einer Zentrierschulter 13 versehen, die, wie dies aus Figur 3 ersichtlich ist, mit denen Rundstahl-Stäben 8 innerhalb des Induktionsofens 1 derart zusammenwirkt, dass sie einer Rotation des Stahlblocks 2 und der Schale 10 um die Längsachse entgegenwirkt.

Anstelle der Zentrierschultern 13 kann die Schale 10 auf ihrer Unterseite außenseitig beispielsweise mit Gleitkufen, Rippen oder Wülsten versehen sein, die ebenfalls einer Rotation der Anordnung aus Schale 10 und Stahlblock 2 innerhalb des Induktionsofens 1, beispielsweise im Zusammenwirken mit dem Blechstreifen 7, entgegenwirken.

Das erfindungsgemäße Verfahren wird nachstehend anhand der Figuren 5 bis 8 erläutert. Figur 5 zeigt die Zufuhrseite einer Anordnung von zwei Induktionsöfen 1. Die Induktionsöfen 1 sind nebeneinander und parallel zueinander angeordnet. Kalte Stahlblöcke 2 werden über einen Zuführrollgang 14 an eine Beladestation 15 verbracht. Weiterhin sind zwei Einschieberollgänge 16 vorgesehen. Parallel zu den Einschieberollgängen 16 sind ein erstes Schalenmagazin 17A und ein zweites Schalenmagazin 17B angeordnet. Beispielsweise aus dem ersten Schalenmagazin 17A wird mittels einer Hebeeinrichtung 18, die als Vakuum-Hebeeinrichtung ausgebildet ist, eine Schale 10 entnommen und auf einen Einschieberollgang 16 aufgelegt. Über einen nicht dargestellten Blocklader wird ein Stahlblock 2 von dem Zuführrollgang 14 auf die auf dem Einschieberollgang 16 befindlichen Schale 10 aufgelegt. Der Einschieberollgang ist vor einem Induktionsofen 1 so angeordnet, dass der betreffende Stahlblock 2 mit der darunterliegenden Schale 10 fluchtend vor der Ofenröhre ausgerichtet ist. Über eine hydraulische Zylinder-Anordnung 19 (Blockpusher) wird ein Stahlblock 2 sodann in den betreffenden Induktionsofen 1 eingeschoben, wobei die in Figur 3 dargestellte Blocksäule innerhalb des Induktionsofens 1 verschoben wird. Der in der Blocksäule führende Stahlblock 2 gelangt dadurch in die in Figur 6 schematisch dargestellte Ausgleichskammer 9 am abfuhrseitigen Ende des Induktionsofens 1.

Mit Bezug auf Figur 6 wird der Stahlblock 2 aus der Ausgleichskammer 9 mittels einer Entnahmezange 20 auf einen Entnahmerollgang 21 gezogen. Dort wird mittels einer weiteren hydraulischen Zylinder-Anordnung 23 (Blockpusher) der erwärmte Stahlblock 2 auf einen Abtransportrollgang 22 geschoben.

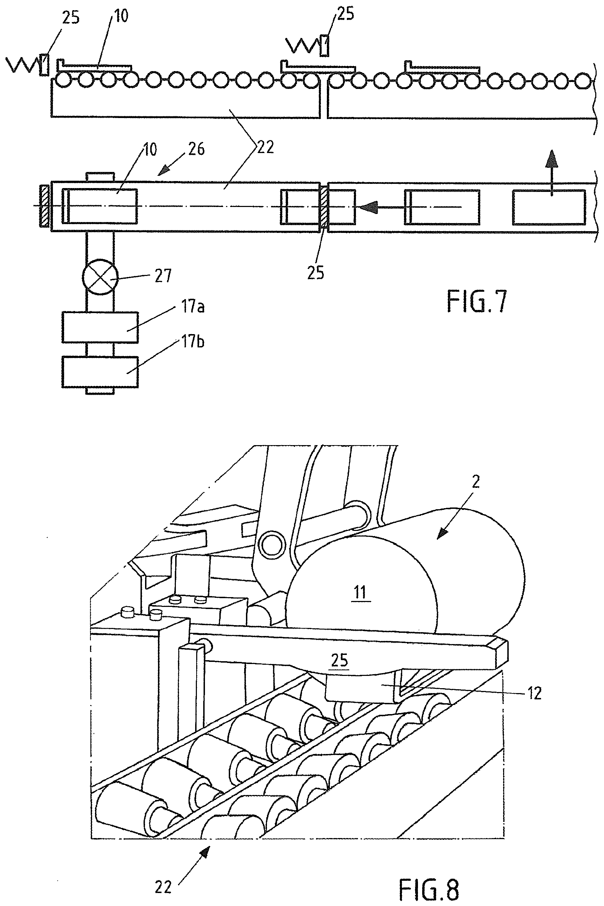

Über den Abtransportrollgang 22 fahren der Stahlblock 2 und die darunterliegende Schale 10 gemeinsam zu einer Blockhebeeinrichtung 24, die den Stahlblock 2 zwecks Weiterverarbeitung vertikal anhebt. Die Transportbewegung der Anordnung aus Schale 10 und erwärmtem Stahlblock 2 wird durch einen sich über den Abtransportrollgang 22 erstreckenden Anschlag 25, der als Joch oder Brücke ausgebildet ist, gestoppt. Die Höhe des Anschlags 25 ist so gewählt, dass ein Anheben des erwärmten Stahlblocks 2 mit der Blockhebeeinrichtung 24 ein Abstreifen der Schale 10 von dem Stahlblock 2 bewirken würde, für den Fall, dass die Schale 10 an dem Stahlblock 2 klebt. Die Schale 10, die entweder auf den Abtransportrollgang 22 zurückfällt oder auf diesem liegen bleibt, wird getrennt von dem Stahlblock 2 auf dem Abtransportrollgang 22 an eine Schalenentnahmeposition 26 (siehe Figur 7) weitertransportiert. Der Stahlblock 2 und die Schale 10 erreichen gemeinsam die Position, an welcher sich der Anschlag 25 befindet. Der Stahlblock 2 wird angehoben, die Schale 10 bleibt liegen oder wird abgestreift, falls diese an dem Stahlblock 2 haften sollte. Die Schale 10 fährt unter dem Anschlag 25 hindurch, bis der darüber an der Blockhebeeinrichtung 24 gehaltene Stahlblock 2 frei ist. Der Abtransportrollgang 22 stoppt, der Stahlblock 2 wird unmittelbar auf dem Abtransportrollgang 22 abgelegt. Der Anschlag 25 wird nach oben geschwenkt, sodass er den Weg für den auf dem Abtransportrollgang 22 befindlichen Stahlblock 2 freigibt. Der Abtransportrollgang 22 startet bzw. fährt wieder an und die Schale 10 und der Stahlblock 2 fahren getrennt voneinander in die nächste Position.

An der Schalenentnahmeposition 26, wird die Schale 10 mittels eines Schalenmanipulators 27 in eines der Schalenmagazine 17 A, 17B zurückgeführt.

Figur 8 zeigt eine perspektivische Ansicht der Anordnung umfassend einen Stahlblock 2 mit der darunterliegenden Schale auf dem Abtransportrollgang 22, wobei das führende Ende 11 des Stahlblocks 2 gegen den Anschlag 25 anliegt.

### Bezugszeichenliste

- 1: Induktionsofen
- 2: Stahlblock
- 3: Induktionsspule
- 4: Stahlmantel
- 5: Betonauskleidung
- 6: Ofenraum
- 7: Blechstreifen
- 8: Rundstahl-Stäbe
- 9: Ausgleichskammer
- 10: Schale
- 11: führendes Ende des Stahlblocks 2
- 12: Schulter
- 13: Zentrierschultern
- 14: Zuführrollgang
- 15: Beladestation
- 16: Einschieberollgänge
- 17 A: erstes Schalenmagazin
- 17 B: zweites Schalenmagazin
- 18: Hebeeinrichtung
- 19: Zylinder/Stempel-Anordnung
- 20: Entnahmezange
- 21: Entnahmerollgang
- 22: Abtransportrollgang
- 23: Zylinder/Stempel-Anordnung
- 24: Blockhebeeinrichtung
- 25: Anschlag
- 26: Schalenentnahmeposition
- 27: Schalenmanipulator

### Bezugszeichenliste

- 1: Induktionsofen
- 2: Stahlblock
- 3: Induktionsspule
- 4: Stahlmantel
- 5: Betonauskleidung
- 6: Ofenraum
- 7: Blechstreifen
- 8: Rundstahl-Stäbe
- 9: Ausgleichskammer
- 10: Schale
- 11: führendes Ende des Stahlblocks 2
- 12: Schulter
- 13: Zentrierschultern
- 14: Zuführrollgang
- 15: Beladestation
- 16: Einschieberollgänge
- 17 A: erstes Schalenmagazin
- 17 B: zweites Schalenmagazin
- 18: Hebeeinrichtung
- 19: Zylinder/Stempel-Anordnung
- 20: Entnahmezange
- 21: Entnahmerollgang
- 22: Abtransportrollgang
- 23: Zylinder/Stempel-Anordnung
- 24: Blockhebeeinrichtung
- 25: Anschlag
- 26: Schalenentnahmeposition
- 27: Schalenmanipulator

## Patentansprüche

1. Verfahren zur induktiven Erwärmung von Stahlblöcken (2) zwecks Herstellung nahtloser Rohre im Strangpressverfahren unter Verwendung wenigstens einer Schale (10) aus einem nicht magnetisierbaren oder nicht induktiven Blech als Transportschuh für die Stahlblöcke (2), die zur induktiven Erwärmung zwecks Herstellung nahtloser Rohre im Strangpressverfahren durch einen vorzugsweise röhrenförmigen Induktionsofen (1) geschoben werden, wobei die Schale (10) so ausgebildet ist, dass sie die Kontur des zu erwärmenden Stahlblocks (2) teilweise umgreift, und die Schale (10) an einem in Durchschubrichtung oder Transportrichtung führenden Ende mit einer sich in einem Winkel zur Transportrichtung erstreckenden Schulter (12) versehen ist, gegen die der Stahlblock (2) so anliegt, dass der durchgeschobene Stahlblock (2) die Schale (10) mitnimmt, umfassend folgende Verfahrensschritte:
a) Entnehmen einer Schale (10) aus einem Schalenmagazin (17A,17B)
b) Bereitstellen der Schale (10) auf einer Einschubeinrichtung, so dass die Schulter (12) an dem in Transportrichtung führenden Ende zu liegen kommt und gegen die Schwerkraft nach oben weist,
c) Auflegen des Stahlblocks (2) auf die Schale (10),
d) Einschieben der Anordnung der Schale (10) mit dem darauf befindlichen Stahlblock (2) in den Induktionsofen (1), wobei die Anordnung aus Schale (10) und Stahlblock (2) dabei einen gegebenenfalls bereits in dem Induktionsofen (1) befindlichen Stahlblock (2) auf einer Schale (10) weiterschiebt,
e) Herausziehen des erwärmten Stahlblocks (2) auf der Schale (10) und mit der Schale (10) aus dem Induktionsofen (1),
f) Trennen des erwärmten Stahlblocks (2) von der Schale (10) und
g) Wiederholen der Verfahrensschritte a) bis f), wobei
die Verfahrensschritte a) bis f) in der Reihenfolge ihrer Aufzählung durchgeführt werden, **dadurch gekennzeichnet, dass** das Trennen des erwärmten Stahlblocks (2) von der Schale (10) gemäß Verfahrensschritt f) während einer horizontalen Transportbewegung der Anordnung aus dem erwärmten Stahlblock (2) und der Schale (10) oder auf einem horizontalen Transportmittel erfolgt, wobei die horizontale Transportbewegung des Stahlblocks (2) mittels eines Anschlags (25) oder an einem Anschlag (25) gestoppt wird, der unmittelbar gegen eine in Transportrichtung des Stahlblocks führende Stirnseite des Stahlblocks (2) wirkt und der so angeordnet ist, dass er beim Anheben der Anordnung aus Schale (10) und Stahlblock (2) als Abstreifer wirkt, wobei die Höhe des Anschlags (25) so gewählt ist, dass ein Anheben des erwärmten Stahlblocks (2) mit einer Blockhebeeinrichtung (24) ein Abstreifen der Schale (10) von dem Stahlblock (2) bewirken würde, für den Fall, dass die Schale (10) an dem Stahlblock (2) klebt.

2. Verfahren nach Anspruch 1, **dadurch gekennzeichnet, dass** die Schale (10) mittels einer Hebeeinrichtung aus einem Schalenmagazin (17A,17B) entnommen wird und auf einem Einschieberollgang (16) abgelegt wird, dass anschließend der Stahlblock (2) auf die auf dem Einschieberollgang (16) befindliche Schale (10) abgelegt wird und die Anordnung umfassend die Schale (10) und den Stahlblock (2) mittels eines hydraulischen Stempels von dem Einschieberollgang (16) in den Induktionsofen (1) geschoben wird.

3. Verfahren nach einem der Ansprüche 1 oder 2, **dadurch gekennzeichnet, dass** ein erwärmter Stahlblock (2) mittels einer Entnahmezange (20) mit der darunterliegenden Schale (10) aus einer Ausgleichskammer (9) des Induktionsofens (1) auf einen Entnahmerollgang (21) gezogen wird.

4. Einrichtung zur Durchführung des Verfahrens gemäß einem der Ansprüche 1 bis 3 umfassend wenigstens einen röhrenförmig ausgebildeten Induktionsofen (1), wenigstens ein Schalenmagazin (17A,17B) mit einer Vielzahl von Schalen (10), jeweils aus einem nicht magnetisierbaren bzw. nicht induktiven Blech als Transportschuh für die Stahlblöcke (2), wobei die Schalen (10) jeweils so ausgebildet sind, dass sie die Kontur des zu erwärmenden Stahlblocks (2) teilweise umgreifen, und die Schalen (10) an einem in Durchschubrichtung oder Transportrichtung führenden Ende mit einer sich in einem Winkel zur Transportrichtung erstreckenden Schulter (12) versehen sind, gegen die der Stahlblock (2) so anliegt, dass der durchgeschobene Stahlblock (2) die Schale (10) mitnimmt, wenigstens ein Transportmittel zur Bereitstellung von Schalen (10) an einer Beladestation (15) , wenigstens ein Transportmittel zur Zuführung von kalten Stahlblöcken (2) an die Beladestation (15), an welcher jeweils ein kalter Stahlblock (2) auf einer Schale (10) abgelegt wird, wenigstens eine Einrichtung zum Einschieben von auf den Schalen (10) abgelegten Stahlblöcken (2) , Mittel zur Entnahme von erwärmten Stahlblöcken (2) aus dem Induktionsofen (1) , wenigstens ein Transportmittel zum Abtransport der erwärmten Stahlblöcke (1) sowie Mittel zum Trennen der erwärmten Stahlblöcke (2) von den Schalen (10), wobei das Transportmittel, als Mittel zum Trennen der erwärmten Stahlblöcke (2) von den Schalen (10) wenigstens einen Anschlag (25) aufweist, der unmittelbar gegen eine in Transportrichtung des erwärmten Stahlblocks (2) führende Stirnseite des Stahlblocks (2) wirkt und der so angeordnet ist, dass er beim Anheben der Anordnung aus Schale (10) und Stahlblock (2) als Abstreifer für die Schale (10) wirkt, und wobei die Höhe des Anschlags (25) so gewählt ist, dass ein Anheben des erwärmten Stahlblocks (2) mit einer Blockhebeeinrichtung (24) ein Abstreifen der Schale (10) von dem Stahlblock (2) bewirken würde, für den Fall, dass die Schale (10) an dem Stahlblock (2) klebt.

5. Einrichtung nach Anspruch 4, umfassend wenigstens einen Zuführrollgang (14) für kalte Stahlblöcke (2), einen Einschieberollgang (16) zur Aufnahme von Schalen (10) mit darauf angeordneten Stahlblöcken (2), wenigstens einen Entnahmerollgang (21) sowie wenigstens einen Abtransportrollgang (22).

## Claims

1. Method of inductively heating steel ingots (2) for the purpose of producing seamless tubes in an extrusion process using at least one shell (10) of a non-magnetisable or non-inductive sheet as a transport shoe for the steel ingots (2), which are pushed through a preferably tubular induction furnace (1) for inductive heating for the purpose of producing seamless tubes in the extrusion process, wherein the shell (10) is formed in such a way that it partially reaches around the contour of the steel ingot (2) to be heated, and the shell (10) is provided at an end leading in the pushing-through direction or transport direction with a shoulder (12), which extends at an angle to the transport direction and against which the steel ingot (2) rests in such a way that the pushed-through steel ingot (2) entrains the shell (10), comprising the following method steps:
a) extracting a shell (10) from a shell magazine (17A, 17B)
b) providing the shell (10) on a push-in device so that the shoulder (12) comes to rest at the end leading in the transport direction and faces upwardly against gravitational force,
c) placing the steel ingot (2) on the shell (10),
d) pushing the assembly of the shell (10) with the steel ingot (2) disposed thereon into the induction furnace (1), wherein the assembly of shell (10) and steel ingot (2) then pushes forward any steel ingot (2) already present on a shell (10) in the induction furnace (1),
e) pulling out the heated steel ingot (2) on the shell (10) and with the shell (10) from the induction furnace (1),
f) separating the heated steel ingot (2) from the shell (10) and
g) repeating the method steps a) to f), wherein
the method steps a) to f) are carried out in the sequence in which they are listed,
**characterised in that** the separation of the heated steel ingot (2) from the shell (10) according to method step f) takes place during a horizontal transport movement of the assembly of the heated steel ingot (2) and the shell (10) or on a horizontal transport means, wherein the horizontal transport movement of the steel ingot (2) is stopped by means of a stop (25) or at a stop (25), which acts directly against an end face of the steel ingot (2) leading in the transport direction of the steel ingot and which is so arranged that it acts as a stripper when the assembly of shell (10) and steel ingot (2) is lifted, wherein the height of the stop (25) is so selected that lifting of the heated steel ingot (2) by an ingot lifting device (24) would cause stripping of the shell (10) from the steel ingot (2) in the case of the shell (10) adhering to the steel ingot (2).

2. Method according to claim 1, **characterised in that** the shell (10) is extracted from a shell magazine (17A, 17B) by means of a lifting device and is placed on a push-in roller path (16) and that the steel ingot (2) is then placed on the shell (10) disposed on the push-in roller path (16), and the assembly comprising the shell (10) and the steel ingot (2) is pushed by means of a hydraulic ram from the push-in roller path (16) into the induction furnace (1).

3. Method according to one of claims 1 and 2, **characterised in that** a heated steel ingot (2) is pulled by means of extraction pliers (20) with the underlying shell (10) out of a compensating chamber (9) of the induction furnace (1) onto an extraction roller path (21).

4. Device for carrying out the method according to any one of claims 1 to 3, comprising at least one tubular induction furnace (1), at least one shell magazine (17A, 17B) with a plurality of shells (10) each of a non-magnetisable or non-inductive sheet as transport shoe for the steel ingots (2), wherein the shells (10) are each formed so that they partially reach around the contour of the steel ingot (2) to be heated, and the shells (10) are provided at an end leading in pushing-through direction or transport direction with a shoulder (12), which extends at an angle to the transport direction and against which the steel ingot (2) rests in such a way that the pushed-through steel ingot (2) entrains the shell (10), at least one transport means for providing shells (10) at a loading station (15), at least one transport means for feeding cold steel ingots (2) to the loading station (15), at which in each case a cold steel ingot (2) is placed on a shell (10), at least one device for pushing in steel ingots (2) placed on the shells (10), means for extracting heated steel ingots (2) from the induction furnace (1), at least one transport means for transport away of the heated steel ingots (1), and means for separating the heated steel ingots (2) from the shells (10), wherein the transport means has as a means for separating the heated steel ingots (2) from the shells (10) at least one stop (25), which acts directly against an end face of the steel ingot (2) leading in the transport direction of the heated steel ingot (2) and which is so arranged that it acts as a stripper for the shell (10) when the assembly of the shell (10) and the steel ingot (2) is lifted, and wherein the height of the stop (25) is so selected that lifting of the heated steel ingot (2) by an ingot lifting device (24) would cause stripping of the shell (10) from the steel ingot (2) in the case of the shell (10) adhering to the steel ingot (2).

5. Device according to claim 4, comprising at least one feed roller path (14) for cold steel ingots (2), a push-in roller path (16) for receiving shells (10) with steel ingots (2) arranged thereon, at least one extraction roller path (21), and at least one outfeed roller path (22).

## Revendications

1. Procédé destiné au chauffage inductif de lingots d'acier (2) à des fins de fabrication de tubes sans soudure dans le procédé d'extrusion en utilisant au moins une coquille (10) constituée d'une tôle non magnétisable ou non inductive à titre de sabot de transport pour les lingots d'acier (2) qui sont poussés pour le chauffage inductif à des fins de fabrication de tubes sans soudure dans le procédé d'extrusion à travers un four à induction (1), de préférence de forme tubulaire ; dans lequel la coquille (10) est réalisée d'une manière telle qu'elle enserre en partie le contour du lingot d'acier (2) qui doit être chauffé, et la coquille (10) est munie, à une extrémité située en tête dans la direction de poussée ou dans la direction de transport, d'un épaulement (12) qui s'étend en formant un angle par rapport à la direction de transport, contre lequel vient s'appuyer le lingot d'acier (2) d'une manière telle que le lingot d'acier (2) qui est poussé sur tout son parcours entraîne avec lui la coquille (10), comprenant les étapes opératoires indiquées ci-après :
a) le prélèvement d'une coquille (10) à partir d'un magasin de coquilles (17A, 17B) ;
b) la mise à disposition de la coquille (10) sur un mécanisme d'introduction par poussée d'une manière telle que l'épaulement (12) vient se disposer contre l'extrémité située en tête dans la direction de transport et prend une orientation vers le haut à l'encontre de la force de gravité ;
c) le placement du lingot d'acier (2) sur la coquille (10) ;
d) l'introduction par poussée de l'agencement de la coquille (10) sur laquelle se trouve le lingot d'acier (2), dans le four à induction (1) ; dans lequel l'agencement constitué par la coquille (10) et le lingot d'acier (2) pousse plus loin un lingot d'acier (2) qui se trouve le cas échéant déjà dans le four à induction (1) sur une coquille (10) ;
e) le retrait du lingot d'acier chauffé (2) sur la coquille (10) et avec la coquille (10) hors du four à induction (1) ;
f) la séparation du lingot d'acier chauffé (2) par rapport à la coquille (10) ; et
g) la répétition des étapes opératoires a) à f) ; dans lequel
les étapes opératoires a) à f) sont mises en oeuvre dans la succession de leur énumération, **caractérisé en ce que** la séparation du lingot d'acier chauffé (2) par rapport à la coquille (10) conformément à l'étape opératoire f) a lieu au cours d'un mouvement de transport horizontal de l'agencement constitué par le lingot d'acier chauffé (2) et la coquille (10) ou sur un moyen de transport horizontal ; dans lequel le mouvement de transport horizontal du lingot d'acier (2) est stoppé au moyen d'une butée (25) ou contre une butée (25) qui agit directement contre un côté avant du lingot d'acier (2) situé en tête dans la direction de transport du lingot d'acier (2) et qui est disposée d'une manière telle que, lors du soulèvement de l'agencement constitué par la coquille (10) et le lingot d'acier (2), elle se comporte à la manière d'un racloir; dans lequel la hauteur de butée (25) est sélectionnée d'une manière telle qu'un soulèvement du lingot d'acier chauffé (2) avec un mécanisme de soulèvement de lingot (24) mettrait en oeuvre un raclage de la coquille (10) par rapport au lingot d'acier (2) dans le cas où la coquille (10) adhérerait au lingot d'acier (2).

2. Procédé selon la revendication 1, **caractérisé en ce que** la coquille (10) est prélevée au moyen d'un mécanisme de soulèvement à partir d'un magasin de coquilles (17A, 17B) et est déposée sur un transporteur à rouleaux (16) pour l'introduction par poussée ; **en ce qu'**ensuite le lingot d'acier (2) est déposé sur la coquille (10) qui se trouve sur le transporteur à rouleaux (16) pour l'introduction par poussée et l'agencement qui comprend la coquille (10) et le lingot d'acier (2) est poussé au moyen d'un piston hydraulique à partir du transporteur à rouleaux (16) pour l'introduction par poussée jusque dans le four à induction (1).

3. Procédé selon la revendication 1 ou 2, **caractérisé en ce que** l'on extrait un lingot d'acier chauffé (2) au moyen d'une pince d'extraction (20) avec la coquille (10) qui se trouve en dessous, à partir d'une chambre de compensation (9) du four à induction (1) sur un transporteur à rouleaux (21) pour l'extraction.

4. Equipement destiné à la mise en oeuvre du procédé selon l'une quelconque des revendications 1 à 3, qui comprend : au moins un four à induction (1) réalisé sous forme tubulaire ; au moins un magasin de coquilles (17A, 17B) qui comprend une multitude de coquilles (10), chacune d'elles étant constituée d'une tôle non magnétisable, respectivement non inductive à titre de sabot de transport pour les lingots d'acier (2) ; dans lequel les coquilles (10) sont respectivement réalisées d'une manière telle qu'elles enserrent en partie le contour du lingot d'acier (2) qui doit être chauffé, et les coquilles (10) sont munies sur tout leur parcours, à une extrémité située en tête dans la direction de poussée ou dans la direction de transport, d'un épaulement (12) qui s'étend en formant un angle par rapport à la direction de transport, contre lequel vient s'appuyer le lingot d'acier (2) d'une manière telle que le lingot d'acier (2) qui est poussé sur tout son parcours entraîne avec lui la coquille (10) ; au moins un moyen de transport pour la mise à disposition de coquilles (10) à un poste de chargement (15) ; au moins un moyen de transport pour l'acheminement de lingots d'acier froids (2) au poste de chargement (15) dans lequel respectivement un lingot d'acier froid (2) est déposé sur une coquille (10) ; au moins un mécanisme pour l'introduction par poussée de lingots d'acier (2) qui sont déposés sur les coquilles (10) ; des moyens pour l'extraction de lingots d'acier chauffés (2) hors du four à induction (1) ; au moins un moyen de transport pour l'évacuation par transport des lingots d'acier chauffés (2) ainsi que des moyens pour la séparation des lingots d'acier chauffés (2) par rapport aux coquilles (10) ; dans lequel le moyen de transport présente, à titre de moyen pour la séparation des lingots d'acier chauffés (2) par rapport aux coquilles (10), au moins une butée (25) qui agit directement contre un côté avant du lingot d'acier (2) située en tête dans la direction de transport du lingot d'acier chauffé (2) et qui est disposée d'une manière telle que, lors du soulèvement de l'agencement constitué par la coquille (10) et le lingot d'acier (2), elle se comporte à la manière d'un racloir pour la coquille (10) ; et dans lequel la hauteur de butée (25) est sélectionnée d'une manière telle qu'un soulèvement du lingot d'acier chauffé (2) avec un mécanisme de soulèvement de lingot (24) mettrait en oeuvre un raclage de la coquille (10) par rapport au lingot d'acier (2) dans le cas où la coquille (10) adhérerait au lingot d'acier (2).

5. Equipement selon la revendication 4, qui comprend au moins un transporteur à rouleaux (14) pour l'acheminement, destiné à des lingots d'acier froids (2), un transporteur à rouleaux (16) pour l'introduction par poussée, destiné à la réception de coquilles (10) sur lesquelles sont disposés des lingots d'acier (2), au moins un transporteur à rouleaux (21) pour l'extraction, et au moins un transporteur à rouleaux (22) pour l'évacuation par transport.
